# EUROPÄISCHE PATENTSCHRIFT

(11) **EP 3 524 059 B1**
(45) Veröffentlichungstag und Bekanntmachung des Hinweises auf die Patenterteilung: **29.07.2020**
(21) Anmeldenummer: 18156558.1
(22) Anmeldetag: 13.02.2018
(51) Int. Cl.: A23J 3/26, A23K 40/25, A23L 13/60, A23P 30/20, A21C 11/16, F28F 9/00, F28D 7/10, F28F 1/36, B29C 48/90, B29C 48/695, B29C 48/09, A23N 17/00, F28D 21/00

(54) **KÜHLDÜSE FÜR EINEN EXTRUDER**
COOLING DIE FOR AN EXTRUDER
BUSE DE REFROIDISSEMENT POUR UNE EXTRUDEUSE

(43) Veröffentlichungstag der Anmeldung: 14.08.2019
(73) Patentinhaber: Bühler AG, 9240 Uzwil (CH)
(72) Erfinder: Klein, Frieder, 8274 Tägerwilen (CH); Mauchle, Markus, 9220 Bischofszell (CH); Strässle, Stefan, 9240 Uzwil (CH); Weinberger, Michael, 9240 Uzwil (CH)
(74) Vertreter: Hepp Wenger Ryffel AG

(56) Entgegenhaltungen:
- EP-A1- 2 277 396
- EP-A1- 2 797 682
- EP-A1- 2 873 941
- CN-U- 203 072 864
- DE-B- 1 136 030
- GB-A- 151 258
- JP-A- H0 662 821
- US-A1- 2009 079 278
- US-A1- 2013 292 089
- US-A1- 2017 321 970
- Anonymous: "Protein Texturization Technology", Brabender GmbH und Co. K , Juni 2017 (2017-06), Seiten 1-4, XP002783549, Gefunden im Internet: URL:https://www.brabender.com/typo3conf/ex t/cokcb2web/Resources/Public/Files/files.p hp?d=1&p=TjJZNVROak1NME5tM1lUVU9EUTVtSTNaR TRNR2haREVabUk9X09tTTFaVFY0.pdf [gefunden am 2018-08-02]

## Beschreibung

Die Erfindung betrifft das technische Gebiet der Extrusion von Nahrungsmitteln und Futtermitteln für Tiere.

Bei der Extrusion von Nahrungsmitteln und/oder der Extrusion von Futtermitteln für Tiere erfolgt häufig eine sogenannte Nasstexturierung, bei der sich faserartige Strukturen ausbilden. Das ist beispielsweise dann der Fall, wenn Produkte extrudiert werden, die tierische oder pflanzliche Proteine enthalten. Eine faserartige Struktur ist nicht immer einfach zu erreichen, da ein Extrudat am Ausgang des Extruders typischerweise expandiert, was einer dichten, kompakten, faserartigen Produktstruktur abträglich ist. Daher werden für solche Zwecke im Stand der Technik Kühldüsen verwendet, die am Ausgang des Extruders angeordnet sind und welche die Expansion des Extrudats reduzieren oder, falls gewünscht, auch weitestgehend vollständig unterdrücken sollen. Bei der konstruktiven Ausgestaltung solcher Kühldüsen besteht jedoch noch erheblicher Verbesserungsbedarf. So ist bspw. die Kühlung häufig unzureichend und ungleichmässig, der Aufbau zu komplex und die Reinigbarkeit unbefriedigend.

Im Stand der Technik sind verschiedenste Ausführungen von Kühlwerkzeugen bekannt, die alle mit Nachteilen behaftet sind.

Zum einen sind Ausbildungen mit durchgehend ringförmigem Extrudatströmungskanal bekannt, bspw. aus DE 24 06 146 und US 3,925,566. Hierbei ist die Befestigung des Innenmantels problematisch. Sie wird beispielsweise durch Stege realisiert, die aber den Produktfluss stören. Selbst wenn die Stege noch im Eingangsbereich des Kühlwerkzeugs, beispielsweise im Verteiler, angeordnet sind, werden einmal getrennte Stränge von insbesondere proteinhaltigem Extrudat nicht wieder homogen verbunden, was das Erscheinungsbild und die Textur negativ beeinflusst. Auch Stege im Endbereich des Kühlwerkzeugs sind nachteilig, da sie aus Festigkeitsgründen voluminös ausgeführt werden müssen, damit aber den Querschnitt des Produktkanals wesentlich verengen und das Erscheinungsbild und die Textur des Produkt ebenfalls negativ beeinflussen.

Zum anderen sind flach ausgebildete Kühlwerkzeuge bekannt, bspw. aus US 4,910,040, WO 96/36242, WO 99/13735 und EP 1 059 040. Vor allem bei hohem Durchsatz müssen solche flach ausgebildeten Kühlwerkzeuge aber recht breit ausgeführt werden, wesentlich breiter als die Austrittsöffnung(en) des Extruders. Das wirkt sich nachteilig auf die Homogenität der Fliessgeschwindigkeit in dem Kühlwerkzeug aus, was sich wiederum negativ auf das Erscheinungsbild und die Textur des Produkts auswirkt. Zudem sind solche Kühlwerkzeuge konstruktiv nachteilig, da die aus dem Produktdruck resultierende Kraft auf die ebene Wand ein Biegemoment erzeugt, was einen massiveren Aufbau der Wand nötig macht.

Des Weiteren sind Ausbildungen mit mehreren diskreten Extrudatströmungskanälen bekannt. Derartige Konstruktionen sind vom Aufbau her sehr komplex, und auch die Kühlung mehrerer diskreter Extrudatströmungskanäle ist aufwändig und bei Wartung und Betrieb fehleranfällig.

Es ist daher eine Aufgabe der Erfindung, die vorgenannten Nachteile zu überwinden und eine Kühldüse bereitzustellen, das hervorragende Kühleigenschaften gewährleisten kann und dabei einfach aufgebaut und leicht reinigbar ist.

Die Aufgabe wird gelöst durch eine erfindungsgemässe Kühldüse gemäss dem unabhängigen Anspruch 1. Vorteilhafte Ausgestaltungen der Erfindung sind den Unteransprüchen zu entnehmen.

Eine erfindungsgemässe Kühldüse für einen Nahrungs- bzw. Futtermittel-extruder weist ein Einlassende auf, das an einem Nahrungs- bzw. Futtermittelextruder (2) befestigbar ist und an dem Extrudat in die Kühldüse hineinführbar ist. Die Befestigung ist dabei vorzugsweise lösbar ausgestaltet, sodass die Kühldüse leicht ausgetauscht oder für Wartungs- bzw. Reinigungszwecke demontiert werden kann. Die Befestigung erfolgt vorzugsweise mit Schrauben (beispielsweise Sechskantschrauben), Klemmhebeln oder Spannverschlüssen, mit denen in an sich üblicher Art und Weise eine definierte Anpresskraft erzielbar ist.

Die Kühldüse weist ferner ein Auslassende auf, an dem gekühltes Extrudat abführbar ist. Im Bereich des Auslassendes kann eine Konfektionierung des gekühlten Extrudats erfolgen, wie nachfolgend noch erläutert wird.

Im Wesentlichen zwischen dem Einlassende und dem Auslassende der Kühldüse erstreckt sich ein, insbesondere ein einziger, Extrudatströmungskanal. Der Extrudatströmungskanal ist dabei im Wesentlichen als Ringausschnitt ausgebildet. Im Rahmen der Erfindung kann der Ring des Ringausschnitts insbesondere kreisförmig, oval, polygonal, als spline-Kurve oder auch aus Kombinationen davon gebildet sein. Bevorzugt ist eine Ausbildung des Ringausschnitts als Kreisringausschnitt.

Ferner weist die Kühldüse mindestens einen Kühlmittelströmungskanal auf, mit dem der Extrudatströmungskanal (6) in Wärmeübertragungsverbindung steht. Die Wärmeübertragung findet vorzugsweise als Wärmeübergang durch Konvektion statt.

In einem Querschnitt zur Hauptströmungsrichtung ist der Extrudatströmungskanal im Wesentlichen als Ringausschnitt ausgebildet, vorzugsweise als Kreisringausschnitt. Durch die Ausbildung als Ringausschnitt kann eine besonders gleichmässige Produktverteilung, gleichmässige Fliessgeschwindigkeit und gleichmässige Kühlung realisiert werden. Zudem hat sich herausgestellt, dass dünnwandigere Konstruktionen als im Stand der Technik möglich sind, da aus dem Produktdruck im Wesentlichen nur Zugkräfte, jedoch nur praktisch vernachlässigbare Biegekräfte entstehen.

Ferner ist in einem Querschnitt zur Hauptströmungsrichtung die Aussenwand des Extrudatströmungskanals mindestens aus einem ersten Segment und einem zweiten Segment ausgebildet. Besonders bevorzugt sind zwei Segmente, aber auch ein Aufbau aus drei, vier oder mehr Segmenten ist möglich. Die Segmente sind dabei über mechanische Verbindungselemente miteinander verbunden sind. Als mechanische Verbindungsmittel sind wiederum Schrauben (beispielsweise Sechskantschrauben), Klemmhebel oder Spannverschlüsse geeignet; besonders bevorzugt sind Schraubverbindungen. Durch den Aufbau der Aussenwand aus demontierbaren Segementen ergibt sich eine besonders einfache und zuverlässige Reinigbarkeit des Extrudatströmungskanals und des gesamten Kühlwerkzeugs.

Mit einer derartigen Kühldüse können Kapazitäten im Bereich von 125 bis 2'000 kg/h (insbesondere 175 bis 1'500 kg/h, weitere insbesondere 225 bis 1'000 kg/h) Extrudat bei nur geringer Baugrösse der Kühldüse mit einer typischen Länge von 0.5 bis 2.5 m (insbesondere 0.75 bis 2.25 m, weitere insbesondere 1 bis 2m) und einem Durchmesser von 100 bis 800 mm (insbesondere 200 bis 600 mm, weiter insbesondere 300 bis 400 mm) realisiert werden.

Die Kühldüse ist in den Bereichen, die mit dem Nahrungs- bzw. Futtermittel in Kontakt kommen, also insbesondere der Extrudatströmungkanal, aus rostfreiem Edelstahl (bspw. Sortennummern 1.43xx oder 1.44xx gemäss EN 10088) ausgebildet. Diese Materialien zeichnen sich durch hochgradige Lebensmittelechtheit aus. Die Rauhigkeit bevorzugter Materialien liegt im Bereich von Rₐ 1.6 bis Rₐ 0.8 (gemäss DIN EN ISO 4287:1998)

In einer bevorzugten Ausführungsform ist der Extrudatströmungskanal im Querschnitt zur Hauptströmungsrichtung im Wesentlichen als Ringausschnitt, insbesondere als Kreisringausschnitt, ausgebildet, wobei der Ausschnitt mindestens 300°, vorzugsweise von mindestens 325°, besonders bevorzugt von mindestens 350° überstreicht.

Bevorzugt ist in dem Bereich des Querschnitts, der nicht vom Ringausschnitt des Extrudatströmungskanals abgedeckt ist, eine sich im Wesentlichen über die gesamte Länge der Kühldüse erstreckende Stützstruktur für die Innenwand des Extrudatströmungskanals angeordnet. Bei der Stützstruktur handelt es sich bevorzugt um ein Profilelement.

In bevorzugten Ausführungsformen der Kühldüse ist die Innenwand des Extrudatströmungskanals im Wesentlichen zylindrisch, insbesondere hohlzylindrisch, ausgebildet. Derartige Ausbildungen sind fertigungstechnisch besonders einfach herstellbar.

Ganz besonders bevorzugt ist die Innenwand des Extrudatströmungskanals einstückig ausgebildet. Hierdurch sind eine einfache Fertigung und gute Reinigbarkeit gewährleistet.

In bevorzugten Ausführungsformen ist die Aussenwand des Extrudatströmungskanals im Betriebszustand zylindrisch, insbesondere hohlzylindrisch, ausgebildet. Die Aussenwand des Extrudatströmungskanals ist hierbei aus Segmenten zusammengesetzt, wie vorstehend beschrieben.

In bevorzugten Ausführungsformen sind das erste Segment und das zweite Segment der Aussenwand des Extrudatströmungskanals (und ggf. auch weitere Segmente) an der vorstehend beschriebenen Stützstruktur mit mechanischen Verbindungselementen befestigt. Die Befestigung kann beispielsweise mit Schrauben (beispielsweise Sechskantschrauben), Klemmhebeln oder Spannverschlüssen realisiert sein. Die Segmente sind zudem an einer weiteren Position in Umfangsrichtung miteinander verbunden, vorzugsweise auf der der Stützstruktur gegenüberliegenden Seite. Die Verbindung kann auch in dieser Position mit mechanischen Verbindungsmitteln realisiert sein wie vorstehend beschrieben. Die Dichtung ist vorzugsweise durch Presskontakt der Segmente, rein metallisch dichtend ausgeführt. In alternativen Ausführungsformen kann die Dichtung durch eine insbesondere in eine Vertiefung eingelegte Elastomerdichtung bewirkt bzw. unterstützt sein.

In weiteren bevorzugten Ausführungsformen sind das erste Segment und das zweite Segment der Aussenwand des Extrudatströmungskanals (und ggf. auch weitere Segmente) an der Stützstruktur angelenkt und/oder verschwenkbar befestigt, beispielsweise mittels Scharnieren. Durch eine solche Anlenkung bzw. Verschwenkbarkeit kann eine besonders einfache Reinigbarkeit des Extrudatströmungskanals bei minimalem Demontageaufwand realisiert werden. Die Dichtung kann hierbei wiederum wie vorstehend ausgeführt ausgebildet sein.

In bevorzugten Ausbildungen der Kühldüse ist im Bereich des Einlassendes ein insbesondere austauschbarer Verteiler angeordnet. Der Verteiler ist derart ausgebildet, dass Extrudat vom (typischerweise nicht ringförmig oder als Ringausschnitt ausgebildeten) Austrittskanal eines Nahrungs- bzw. Futtermittelextruders über einen einzigen Verteilkanal dem als Ringausschnitt ausgebildeten Extrudatströmungskanal zuführbar ist.

Es hat sich hierbei als vorteilhaft erwiesen, wenn der Verteilkanal über mindestens 50%, vorzugsweise mindestens 70%, besonders bevorzugt mindestens 90% der Länge (vom Austritt des Extruders bis zum Eintritt in den Extrudatströmungskanal) eine konstante Querschnittsfläche aufweist. So kann eine gleichmässige Fliessgeschwindigkeit erzielt werden, was sich als vorteilhaft erwiesen hat.

Im Unterschied zu bekannten Fingerverteilern, die typischerweise eine Länge von 10 cm und mehr (insbesondere 20 cm und mehr, häufig sogar 40 cm und mehr) aufweisen, werden mit einem derart ausgestalteten Verteiler keine unvorteilhaften Erscheinungen im Produktbild und der Textur beobachtet, die im Stand der Technik wohl auf im Fingerverteiler getrennte und auf der Kühlstrecke nicht mehr wieder homogen verbundenen Extrudatsträngen basieren. Auch die Demontierbarkeit und Reinigbarkeit ist gegenüber Fingerverteilern signifikant verbessert.

Besonders bevorzugt ist der Verteiler austauschbar ausgebildet, bspw. aufschraubar.

Durch Austausch des Verteilers können Produkteigenschaften gezielt beeinflusst werden. Es hat sich herausgestellt, dass insbesondere durch Engstellen, die eine innere Scherung des Produkts bewirken, wodurch ein Energieeintrag ins Produkt erfolgt, eine gewisse Faserigkeit im Produkt erzielbar ist.

Bevorzugterweise umfasst der Verteiler ein vorzugsweise als Kegel ausgebildetes Verteilelement. Die Ausbildung als Kreiskegel ist besonders vorteilhaft. Auch die Ausbildung als Kegelstumpf, insbesondere als Kreiskegelstumpf ist selbstverständlich möglich. Bei kegel- bzw. kreiskegelförmiger Ausbildung kann der Verteiler auch mit kugelabschnittsförmiger Spitze realisiert sein, wodurch sich das Strömungsverhalten gezielt beeinflussen und an das Extrudat anpassen lässt. Der Rückstaudruck in den Extruder kann beeinflusst und das Ausmass der Scherung des Produkts beeinflusst werden. Das Verteilelement ist vorzugsweise in einer Vertiefung eingesteckt und wird in dieser Vertiefung durch den Druck des gegen das Verteilelement strömenden Produkts in Position gehalten; die Austauschbarkeit ist auf diese Art und Weise besonders einfach realisiert.

In weiteren bevorzugten Ausführungsformen ist im Bereich des dem Extruder abgewandten und/oder des dem Extruder zugewandten Endes des Verteilers eine Blende anordenbar bzw. angeordnet, mit welcher der Verteilkanal verengbar bzw. verengt ist. Mit derartigen Blenden können wiederum gezielt Produkteigenschaften, inbesondere die Faserigkeit, beeinflusst werden; Langfasrigkeit und Kurzfasrigkeit kann erwirkt werden, aber auch amorphe bzw. homogene Strukturen. Die Dicke der Blenden in Hauptströmungsrichtung liegt im Bereich von 0.1 bis 1.0 cm, vorzugsweise von 0.15 bis 0.9 cm, besonders bevorzugt von 0.2 bis 0.8 cm. Die von Fingerverteilern bekannten Nachteile werden bei Blenden(verengungen) von so geringer Länge nicht beobachtet.

In bevorzugten Ausführungsformen des Verteilers ist dieser mit einem oder mehreren Kühlkanälen zur Kühlung des Verteilkanals von aussen und/oder innen ausgebildet. Durch die Kühlung des Verteilkanals kann eine lokale Überhitzung in diesem Bereich verhindert werden. Es hat sich gezeigt, dass gerade in diesem Bereich des Verteilers das Extrudat einer höheren Erwärmung ausgesetzt sein kann als in anderen Bereichen. Dem kann mit einer gezielten Kühlung effektiv entgegengewirkt werden. Zur Ermittlung der Temperatur des Extrudats im Bereich des Verteilers kann ein Temperaturfühler vorgesehen sein, der vorzugsweise in die Wandung derart eingelassen ist, dass er den Fluss des Extrudats im Wesentlichen nicht behindert. Je nach gemessener Temperatur kann die Kühlung gesteuert und/oder geregelt werden, bspw. durch die Anpassung der Kühlmitteltemperatur und/oder die Fliessgeschwindigkeit des Kühlmittels.

Bevorzugt ist mindestens ein Kühlmittelströmungskanal, welcher mit dem Extrudatströmungskanal in Wärmeübertragungsverbindung steht, auf der Innenseite des Extrudatströmungskanals; und/oder auf der Aussenseite des Extrudatströmungskanals vorhanden. Auf der Innenseite des Extrudatströmungskanals ist der Kühlmittelströmungskanal vorzugsweise spiralförmig vollständig umlaufend ausgebildet. Auf der Aussenseite des Extrudatströmungskanals sind die Kühlmittelströmungskanäle in beiden Segmenten jeweils mäanderförmig in ausgebildet. Der bzw. die Kühlmittelströmungskanäle sind vorzugsweise komplett geschlossen, vorzugsweise verschweisst, und auch bei der Demontage zu Austausch- oder Wartungszwecken nur über die Ein- und Ausgänge für das Kühlmittel zugänglich. Hierdurch können Produktkontaminierungen konstruktiv einfach vermieden werden. Die Ein- und Ausgänge können vorzugsweise als Stutzen ausgebildet sein und das Kühlmittel wird stromaufwärts, entgegen der Hauptströmungsrichtung des Produkts, geführt.

Besonders bevorzugt ist der mindestens eine Kühlmittelströmungskanal auf der Innenseite des Extrudatströmungskanals über die Stützstruktur mit Kühlmittel versorgbar. Hierdurch kann eine besonders zuverlässige Versorgung gewährleistet werden, die auch bei der Demontage bspw. zu Reinigungszwecken des Extrudatströmungskanals nicht geöffnet oder entfernt werden muss.

In einer weiteren bevorzugten Ausführungsform sind am Auslassende der Kühldüse im Bereich des Extrudatströmungskanals Schneidstege angeordnet, sodass das gekühlte Extrudat unmittelbar beim Austritt in Stränge geteilt werden kann. Die Schneidstege können auf einer Schneidplatte angeordnet sein, die am Auslassende der Kühldüse vor dem Extrudatströmungskanal montiert ist. Ferner kann den Schneidstegen nachgeordnet auch noch eine Schneidvorrichtung vorgesehen sein, welche die Stränge der Länge nach teilt. Das kann beispielsweise durch ein rotierendes Messer realisiert sein.

In bevorzugten Ausführungsformen einer Kühldüse (nicht nur wie vorstehend und im Rahmen der Ausführungsbeispiele beschrieben, sondern grundsätzlich jeder Kühldüse für einen Nahrungs- bzw. Futtermittelextruder) ist eine Blende im Bereich eines Verteilkanals angeordnet, wobei die Blende den Verteilkanal verengt und vorzugsweise als Lochblende oder als Blende mit Schlitzen, die als Kreissegmente ausgebildet sind, ausgebildet ist. Hierbei können die Kreis- bzw. Ringsegment als Segmente eines einzigen Kreises bzw. Ringes oder als Segmente verschiedener Kreise bzw. Ringe ausgebildet sein, wie nachstehend im Rahmen der Ausführungsbeispiele noch genauer beschrieben wird.

Mit den bisher bekannten Kühldüsen lassen sich primär hühnerbrustartige Texturen erzielen, d.h. eine überwiegend langfaserige Struktur. Mit Blenden kann hingegen insbesondere mit erfindungsgemässen Kühldüsen eine Verbreiterung des Faserstrukturspektrums erzielt werden, so dass auch andere muskuläre Strukturen tierischer Natur imitiert werden können, beispielsweise Rind, Schwein, Lamm und Fisch, Schalen- und Krustentiere, etc. So können beispielsweise mit Lochblenden Strukturen erzeugt werden, die Rindfleisch ähneln. Mit Schlitzblenden können hingegen Strukturen erzeugt werden, die Fisch oder Huhn ähneln. Es wird vermutet, dass sich erste Fasern im Extruder ausbilden, welche sich in der Kühldüse orientieren. Die Einflussnahme auf die Faserung findet vorteilhafterweise durch Blenden im Bereich des Verteilers zwischen Extruder und eigentlichem Extrudatströmungskanal der Kühldüse.

Die Blenden können als Metallringe oder -scheiben ausgebildet sein, welche ein definiertes Loch- bzw. Schlitzbild aufweisen, und sie können entweder eingangs oder ausgangs des Verteilers platziert werden. Das Loch- bzw. Schlitzbild kann symmetrisch oder asymmetrisch sein und grundsätzlich in vielen Geometrien geformt sein. Bevorzugt sind gerade und gebogene Schlitze sowie Löcher, möglich sind aber auch Sternformen, Kreuze, sowie ornamentale Formen. Gebogene Schlitze, insbesondere wie in den Ausführungsbeispielen ausgeführt, führen zu sehr langen Faserstrukturen mit hoher Widerstandskraft, während gerade Schlitze die Quervernetzung des Produkts fördern. Löcher wiederum trennen das Produkt in feinfaserige Filamente.

Das Produkt erreicht die Blende in der Regel in einem vortexturiertem Zustand, d.h. erste Fasern und Filamente wurden ausgebildet. Die Blende sorgt für eine kurzzeitige Beschleunigung des Flusses, anschliessender Abbremsung beim Verlassen der Blende und damit verbundener Reorientierung der Fasern bzw. Filamente.

Der Vorteil vorstehend beschriebener Blenden liegt insbesondere in der Prozessvariabilität. Neben der allseits beliebten Hühnchenbrustfiletstruktur lassen sich mit Blenden ohne grossen Aufwand auch andere Texturen wie Schwein, Rind, Lamm und Fisch, usw. erschliessen.

Ein weiterer Aspekt dieser Beschreibung betrifft einen Nahrungs- bzw. Futtermittelextruder, ausgestattet mit mindestens einem Kühlwerkzeug wie vorstehend beschrieben.

Ein weiterer Aspekt dieser Beschreibung betrifft ein Verfahren zum Extrudieren eines nasstexturierten Produkts, umfassend den Schritt des Hindurchleitens eines proteinhaltigen Extrudats durch ein am Auslass eines Nahrungs- bzw. Futtermittelextruders angeordnetes Kühlwerkzeug wie vorstehend beschrieben.

Weitere Vorteile der vorliegenden Erfindung ergeben sich nachfolgend aus der nachfolgenden Beschreibung von Ausführungsbeispielen unter Bezugnahme auf die Figuren. In den Figuren bezeichnen gleiche Bezugszeichen gleiche Elemente. Es zeigen:
- Fig.1: Anordnung einer Kühldüse an einem Nahrungs- bzw. Futtermittelextruder (schematisch);
- Fig. 2: Querschnitt durch einer Kühldüse entlang der Ebene X-X in Fig. 3;
- Fig. 3: Längsschnitt durch einer erfindungsgemässen Kühldüse entlang der Ebene Y-Y in Fig. 2;
- Fig. 4a/b: Kühldüse mit abgeklappten bzw. zusammengeführten Segmenten der Aussenwand;
- Fig. 5: Verteiler und Einlassbereich der Kühldüse im Längsschnitt;
- Fig. 6a/b: Lochblende und damit texturiertes Produkt;
- Fig. 7a/b: Schlitzblende und damit texturiertes Produkt;
- Fig. 8: Schlitzblende, wobei die Schlitze als gegeneinander versetzte Ringabschnitte ausgebildet sind.

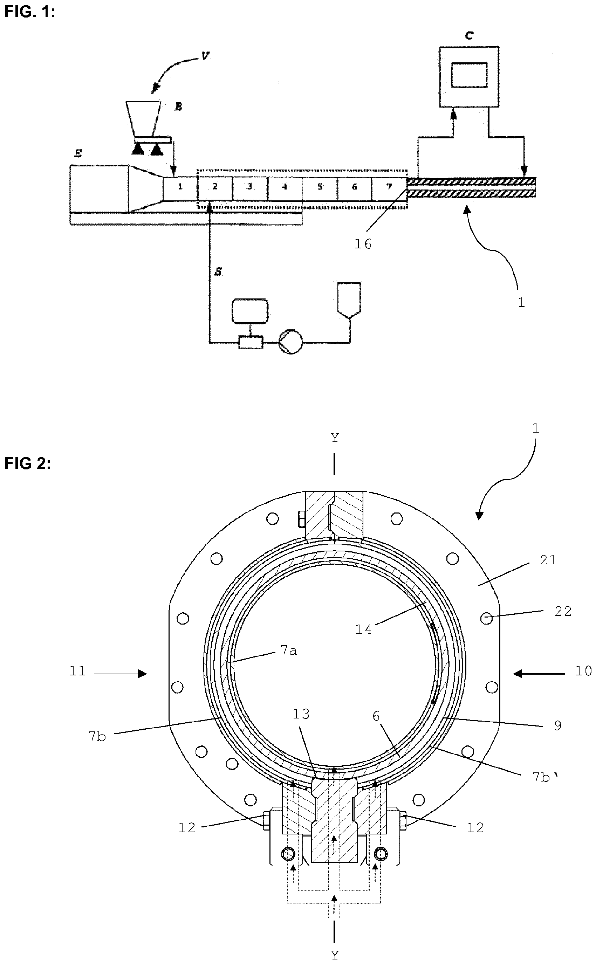

In Fig. 1 ist schematisch ein Extruder E gezeigt, der aus Segmenten (1-7) aufgebaut ist. Ein Rohstoff V wird über die gravimetrische Dosierung B zugeführt. Über eine Zuführung S wird Wasser oder Dampf hinzugeführt. Die Kühldüse ist mit 1 gekennzeichnet. Das Kühlmedium wird bevorzugt an der stromabwärtigen Seite der Kühldüse zugeführt und an der stromaufwärtigen Seite der Kühldüse abgeführt. Die Strömungsrichtung des Kühlmediums ist somit der Fliessrichtung des Extrudats entgegengesetzt. Die Temperierung des Kühlmediums kann über eine Temperaturregelung justiert (gesteuert oder geregelt) werden; das ist durch den Controller C illustriert. Besonders bevorzugt ist die Temperaturregelung derart ausgebildet, dass die Expansion des gekühlten Extrudats kontrolliert, vorzugsweise im Wesentlichen vollständig unterbunden werden kann. Für bestimmte Produkte kann es jedoch auch sinnvoll und ermöglicht sein, eine gewisse Expansion des gekühlten Extrudats zuzulassen. So kann das bspw. bei später zu marinierenden Produkten gewünscht sein, da die Marinade so besser anhaftet. Auch die sensorischen Eigenschaften können beeinflusst werden, sodass bspw eine Textur wie bei 'pulled pork' oder dergleichen resultiert. Auch dies kann durch die Temperaturregelung gesteuert oder geregelt ermöglicht sein.

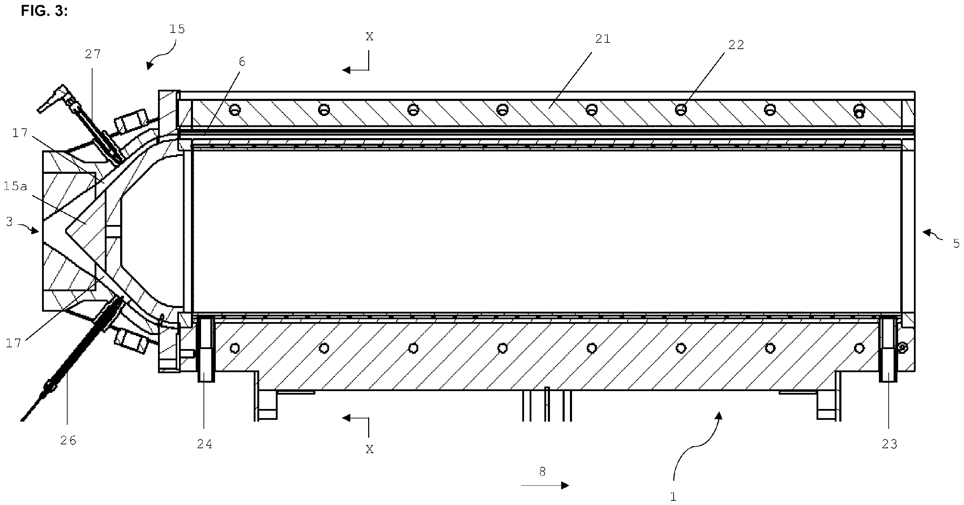

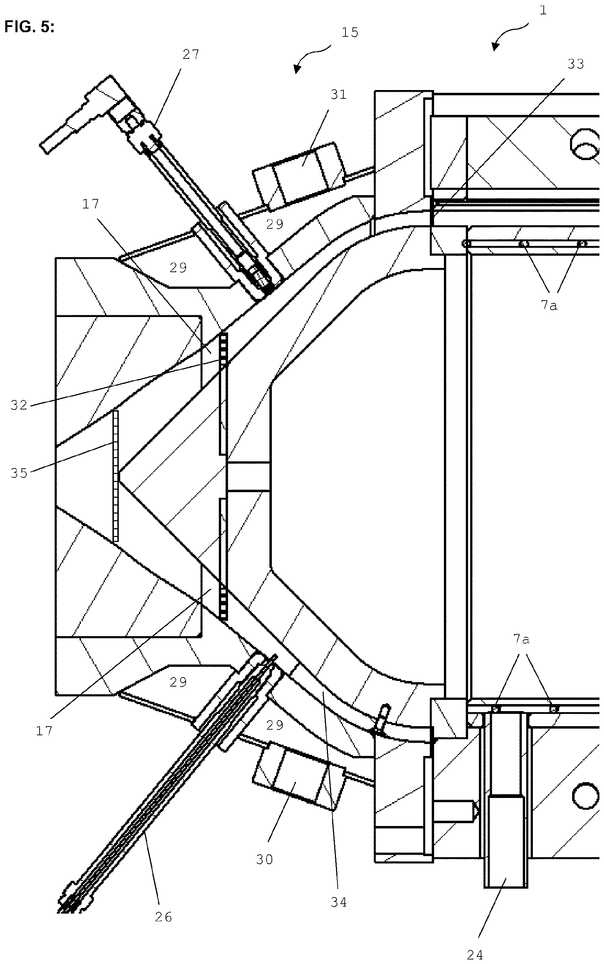

Fig. 2 zeigt den Querschnitt durch eine Kühldüse 1 entlang der Ebene X-X, die in Fig. 3 (mit Blickrichtung) eingezeichnet ist. Zu erkennen ist der Flansch 21 im Bereich des Einlassendes der Kühldüse. In diesem Flansch 21 befinden sich Durchführungen 22, in denen mechanische Verbindungselemente 12 angeordnet werden können, zur Montage des (in den Figuren 3 und 5 detailliert gezeigten) Verteilers 15. Im unteren Bereich ist die Stützstruktur 13 gezeigt. An die Stützstruktur grenzt von beiden Seiten der Extrudatströmungskanal 6 an und bildet einen Ringausschnitt, der nur von der Stützstruktur 13 unterbrochen ist. Durch die Stützstruktur 13 hindurch sind ebenfalls mechanische Verbindungselemente 12 angeordnet, mit denen das erste Segment 10 und das zweite Segment 11 der Aussenwand des Extrudatströmungskanals 6 befestigt sind. Die Aussenwand 9 ist als Hohlwand ausgebildet; in ihr befinden sich Kühlmittelströmungskanäle 7b und 7b', die mäanderförmig ausgebildet sind. Die Innenwand 14 ist ebenfalls als Hohlwand ausgebildet; auch in ihr befindet sich ein spiralförmig ausgebildeter Kühlmittelströmungskanal 7a. Vorzugsweise können die Kühlmittelströmungskanäle 7a der Innenwand 14 und die Kühlmittelkanäle 7b und 7b' der Aussenwand 9 unabhängig voneinander mit Kühlmittel vorsorgt und die Temperaturen der jeweiligen Kühlmittel unabhängig voneinander gesteuert und/oder geregelt werden. Sie können aber auch gemeinsam mit Kühlmittel versorgt werden, besonders bevorzugt über die Stützstruktur 13, wie dies im unteren Bereich der Figur strichliert angedeutet ist.

Fig. 3 zeigt den Längsschnitt durch einer Kühldüse entlang der Ebene Y-Y, die in Fig. 2 eingezeichnet ist. Ersichtlich sind im unteren Bereich der Einlass 23 und der Auslass 24 für das Kühlmittel. Über den Einlass 23 wird sowohl der innere Kühlmittelströmungskanal 7a als auch die äusseren Kühlmittelströmungskanäle 7b und 7b' versorgt, sie in Fig. 2 strichliert angedeutet. Im linken Bereich der Figur, dem Einlassende 3 der Kühldüse 1, ist der Verteiler 15 mit dem Verteilelement 15a angeordnet. Aus einem nicht gezeigten Austrittskanal 16 eines Extruders gelangt Extrudat in den Verteiler 15 und wird sodann in den Verteilerkanal 17 geleitet, der im Weiteren in den Extrudatströmungskanal 6 der Kühldüse 1 übergeht. Die Hauptströmungsrichtung ist mit 8 bezeichnet; das Auslassende 5 des Kühlwerkzeugs ist entsprechend im rechten Bereich der Figur angeordnet. Im Verteiler 15 sind ferner ein Drucksensor 27 und ein Temperatursensor 26 angeordnet. Die ermittelten Werte von Druck bzw. Temperatur können vorteilhaft für die Steuerung oder Regelung von Betriebsparametern (bspw. des Extruders, und/oder der Kühlmitteltemperatur(en) der Kühldüse und/oder des Verteilers) verwendet werden, und/oder auch für die Überwachung des Prozesses und/oder zur Gewährleistung der Reproduzierbarkeit.

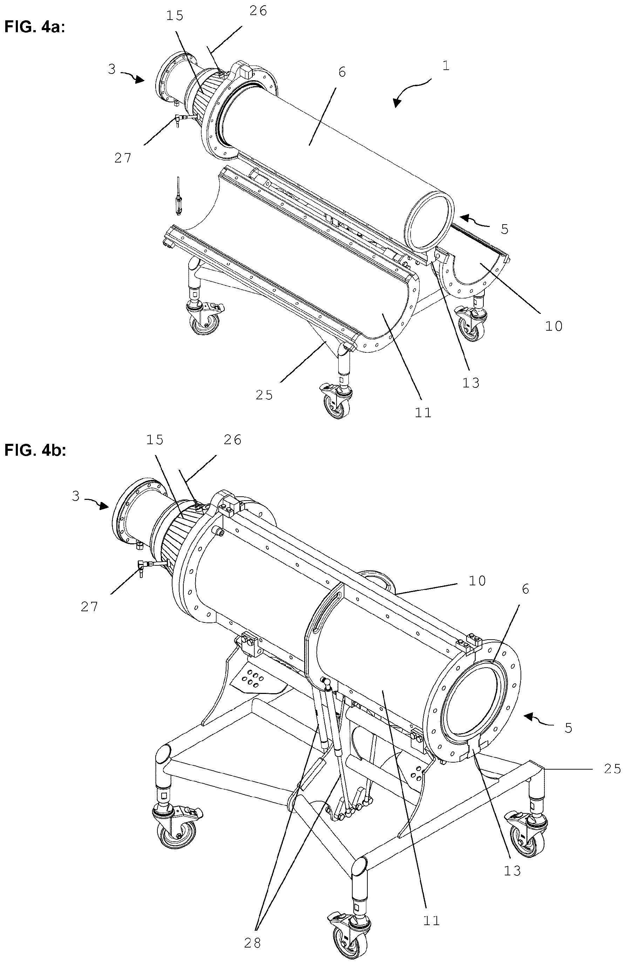

Fig. 4a zeigt einer Kühldüse 1 mit abgeklappten Segmenten 10 und 11 der Aussenwand; der Einlassbereich 3 ist im hinteren Bildteil, der Auslassbereich im vorderen Bildteil angeordnet. Der Verteiler 15 mit dem Temperatursensor 26 und dem Drucksensor 27 sind an dem Verteiler erkennbar. Die beiden Segmente 10 und 11 sind mit Scharnieren an der Stützstruktur 13 befestigt, sodass sie auf einer geeigneten Unterlage, wie bspw. einem Wartungs- und Transportwagen 25, einfach weggeklappt werden können, nachdem ihre Verbindung miteinander im der Stützstruktur 13 gegenüberliegenden Bereich der Kühldüse 1 vorher gelöst wurde. Der gesamte Extrudatströmungskanal 6 liegt sodann frei und ist für Reinigungszwecke in idealer Art und Weise zugänglich. Die Stützstruktur ist auf dem Transportwagen 25 verschraubt. Die Anordnung auf dem Transportwagen 25 bleibt vorteilhafterweise auch während des Betriebs bestehen. Der Transportwagen 25 hat keinen grossen Platzbedarf und ermöglicht jederzeit unkomplizierte Anpassungen und Umbauten. In Fig. 4b ist die Kühldüse 1 mit zusammengefügten Segmenten 10 und 11 gezeigt. Die Segmente 10 und 11 sind mit Gasdruckstossdämpfern gelagert, was einfache Wartung gewährleistet. Bei zusammengefügten Segmenten 10 und 11 ist im Auslassbereich der Extrudatströmungskanal 6 im Auslassbereich 5 erkennbar.

Fig. 5 zeigt den Verteiler 15 und das Einlassende 3 der Kühldüse 1 im Längsschnitt entlang der Ebene Y-Y, die in Fig. 2 eingezeichnet ist, in einer Vergrösserung. Der Verteiler 15 ist im linken Bildteil angeordnet, mit einem Verteilkegel 15a, dessen Spitze der Hauptströmungsrichtung entgegengerichtet ausgerichtet ist. Dieser Verteilkegel 15a ist durch eine einfache Steckbefestigung gehalten. An der Spitze des Verteilkegels 15a ist eine Blende 35 (an einer auch als Position III bezeichneten Stelle) angeordnet, die als Schlitzblende ausgebildet ist. Hinter dem Verteilkegel ist eine weitere Blende 32 (an einer auch als Position II bezeichneten Stelle) angeordnet, die als Lochblende ausgebildet ist. Die Löcher bzw. Schlitze der Blenden 32 und 35 verengen den Verteilkanal 17 und dienen der Texturierung des Produkts. Im Bereich des Übergangs zum zylindrischen Bereich der Kühldüse 1 ist eine weitere Blende 33 (an einer auch als Position I bezeichneten Stelle) angeordnet, die hier als Schlitzblende ausgebildet ist und ebenfalls der Texturierung des Produkts dient. Der Verteiler wird über einen Kühlmittelraum 29 gekühlt; Einlass und Auslass sind mit 30 bzw. 31 bezeichnet, wobei es sich vorteilhafterweise um Schlauchklemmen handelt. Im Verteiler 15 sind, durch den Kühlmittelraum 29 hindurch, ein Drucksensor 27 und ein Temperatursensor 26 an bzw. in den Verteilkanal 17 geführt. Im unteren Bereich ist ein Keil 34 erkennbar. Dieser überführt den ringförmigen Verteilkanal 17 in einen als Ringausschnitt ausgebildeten Extrudatströmungskanal 6. Im unteren Bereich der Kühldüse 1 ist der Extrudatströmungskanal 6 nicht durchgehend ausgebildet (siehe hierzu Fig. 2). Der Kühlmittelauslass 24 ist im unteren Bereich erkennbar; der spiralförmig ausgebildete, innere Kühlmittelströmungskanal 7a ist im rechten Bildteil erkennbar.

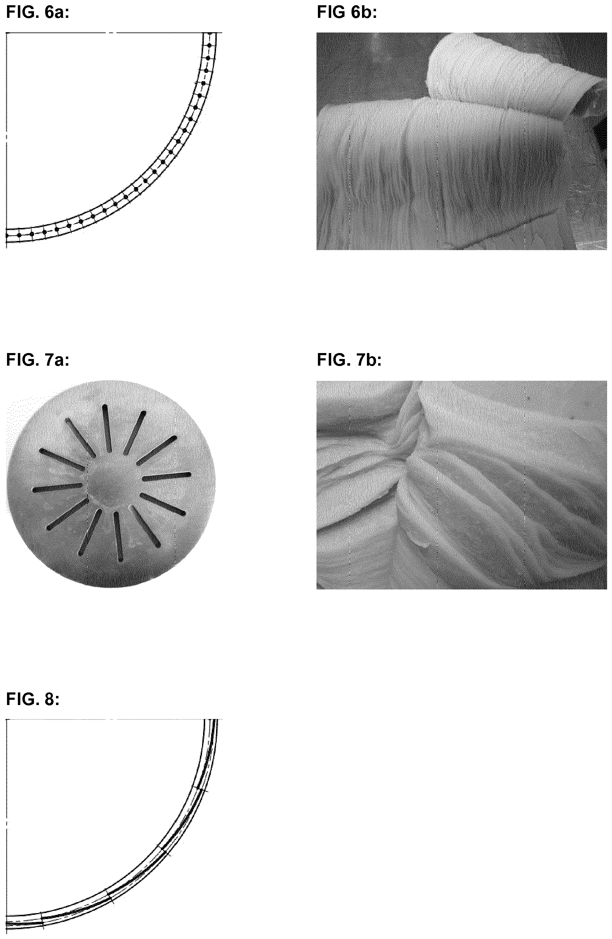

In Fig. 6a/b, 7a/b sind verschiedene Geometrien von Blenden und mit derartigen Blenden texturierten Produkten gezeigt. Es wurde hierbei jeweils wie folgt verfahren:
Die Trockenkomponenten, z.B. Sojaproteinkonzentrat, wurden in den Extruder dosiert (40% bei 500 kg/h) und dort mit Wasser (60% bei 500 kg/h) zu einem Teig vermengt. Die Zugabe anderer Komponenten wie Salze, Farb- und Aromastoffe, Säuren, Laugen, etc. ist möglich, aber nicht zwingend. Im Extruder wird der Rohmaterialmix mittels mechanischer Energie (Drehung der Extruderschnecke) und thermischer Energie (Temperierung Extrudergehäuse), abhängig von Proteinquelle auf 120 - 160°C, insbesondere auf 135 - 145°C erhitzt. Die Proteinstrukturen falten sich auf, reorientieren sich und bilden neue Faserstrukturen aus. Im Übergang vom Extruder in die Kühldüse wurde im Bereich des Verteilers jeweils eine Blende installiert; auch das Installieren mehrerer, sequentiell angeordneter Blenden ist im Rahmen der Erfindung jedoch möglich. Das Extrudat wurde in dem Kühlwerkzeug von bspw. ∼140°C auf 60 - 120°C, insbesondere 85 - 110°C abgekühlt und kann anschliessend weiterverarbeitet werden.

Fig. 6b zeigt ein solches Produkt, welches durch eine erfindungsgemässe Kühldüse mit einer in Fig. 6a ausschnittsweise illustrierten Lochblende (33, angeordnet an Position I; vergl. Fig. 5) im Bereich des Verteilers geleitet wurde. Die Löcher belegen 490 mm², bei einem Produktdurchfluss von 500 kg/h. Die Textur des erhaltenen Produkts zeigt eine Filamentstruktur, die Rinderbraten ähnelt.

Fig. 7b zeigt ein solches Produkt, welches durch ein erfindungsgemässes Kühlwerkzeug mit einer in Fig. 7a gezeigten Schlitzblende (35, angeordnet an Position III; vergl. Fig. 5) im Bereich des Verteilers geleitet wurde. Die Textur des erhaltenen Produkts zeigt eine fein-/kurzfasrige Fischstruktur.

In Fig. 8 ist eine Blende gezeigt, bei welcher die Schlitze als Ringausschnitte ausgebildet sind, wobei Anfang und Ende der Ringausschnitte (in Umfangsrichtung) in unterschiedlichem Abstand vom Mittelpunkt der Blende angeordnet sind. Hierdurch können in Umfangsrichtung Bereiche, die keine Schlitze aufweisen, weitestgehend vermieden werden. Mit einer solchen Blende wird eine fischähnliche, fein-/kurzfasrige Struktur erhalten.

## Patentansprüche

1. Nahrungs- bzw. Futtermittelextruderkühldüse (1), mit
i) einem Einlassende (3), das an einem Nahrungs- bzw. Futtermittelextruder (E) befestigbar ist und an dem Extrudat in die Kühldüse (1) hineinführbar ist;
ii) einem Auslassende (5), an dem gekühltes Extrudat abführbar ist;
iii) einem Extrudatströmungskanal (6), der sich im Wesentlichen von dem Einlassende zu dem Auslassende erstreckt;
iv) mindestens einem Kühlmittelströmungskanal (7), mit dem der Extrudatströmungskanal (6) in Wärmeübertragungsverbindung steht;
wobei im Querschnitt (X-X) zur Hauptströmungsrichtung (8)
v) der Extrudatströmungskanal (6) im Wesentlichen als Ringausschnitt ausgebildet ist; und
vi) eine Aussenwand (9) des Extrudatströmungskanals (6) mindestens aus einem ersten Segment (10) und einem zweiten Segment (11) ausgebildet ist, wobei das erste Segment und das zweite Segment über mechanische Verbindungselemente (12) miteinander verbunden sind.

2. Kühldüse (1) gemäss Anspruch 1, wobei der Extrudatströmungskanal (6) im Querschnitt (X-X) zur Hauptströmungsrichtung (8) im Wesentlichen als Ringausschnitt, insbesondere als Kreisringausschnitt, von mindestens 300°, vorzugsweise von mindestens 325°, besonders bevorzugt von mindestens 350° ausgebildet ist.

3. Kühldüse (1) gemäss einem der Ansprüche 1 oder 2, wobei im Bereich des Querschnitts (X-X), der nicht vom Ringausschnitt des Extrudatströmungskanals (6) abgedeckt ist, eine sich im Wesentlichen über die gesamte Länge des Kühlwerkzeugs (1) erstreckende Stützstruktur (13) für eine Innenwand (14) des Extrudatströmungskanals (6) angeordnet ist.

4. Kühldüse (1) gemäss einem der Ansprüche 1 bis 3, wobei eine Innenwand (14) des Extrudatströmungskanals (6) im Wesentlichen zylindrisch, insbesondere hohlzylindrisch, ausgebildet ist.

5. Kühldüse (1) gemäss Anspruch 4, wobei die Innenwand (14) des Extrudatströmungskanals (6) einstückig ausgebildet ist.

6. Kühldüse (1) gemäss einem der Ansprüche 1 bis 5, wobei die Aussenwand (9) des Extrudatströmungskanals (6) im Betriebszustand zylindrisch, insbesondere hohlzylindrisch, ausgebildet ist.

7. Kühldüse (1) gemäss einem der Ansprüche 3 bis 6, wobei das erste Segment (10) und das zweite Segment (11) der Aussenwand (9) des Extrudatströmungskanals (6) an der Stützstruktur (13) mit mechanischen Verbindungselementen (12) befestigt ist.

8. Kühldüse (1) gemäss Anspruch 7, wobei die das erste Segment (10) und das zweite Segment (11) der Aussenswand (9) des Extrudatströmungskanals (6) an der Stützstruktur (13) angelenkt und/oder verschwenkbar befestigt ist.

9. Kühldüse (1) gemäss einem der Ansprüche 1 bis 8, wobei im Bereich des Einlassendes (3) ein insbesondere austauschbarer Verteiler (15) angeordnet ist, welcher derart ausgebildet ist, dass Extrudat von einem Austrittskanal des Nahrungs- bzw. Futtermittelextruders (E) über einen einzigen Verteilkanal (17) dem als Ringausschnitt ausgebildeten Extrudatströmungskanal (6) zuführbar ist.

10. Kühldüse (1) gemäss Anspruch 9, wobei der Verteiler (15) ein Verteilelement (15a) umfasst, das als Kegel, insbesondere Kreiskegel; Kegelstumpf, insbesondere Kreiskegelstumpf, ausgebildet ist.

11. Kühldüse (1) gemäss einem der Ansprüche 9 oder 10, wobei im Bereich des Verteilers, insbesondere in einem Bereich des dem Extruder abgewandten Endes und/oder in einem Bereich des dem Extruder zugewandten Ende des Verteilers (15) eine Blende (18,18') anordenbar bzw. angeordnet ist, mit welcher Blende (18,18') der Verteilkanal (17) verengbar bzw. verengt ist.

12. Kühldüse (1) gemäss einem der Ansprüche 9 bis 11, wobei der Verteiler (15) mit einem oder mehreren Kühlkanälen (19) zur Kühlung des Verteilkanals (17) von aussen und/oder innen ausgebildet ist.

13. Kühldüse (1) gemäss einem der Ansprüche 1 bis 12, wobei mindestens ein Kühlmittelströmungskanal (7a,7b,7b'), welcher mit dem Extrudatströmungskanal (6) in Wärmeübertragungsverbindung steht,
- auf der Innenseite des Extrudatströmungskanals (6); und/oder
- auf der Aussenseite des Extrudatströmungskanals (6)
vorhanden ist.

14. Kühldüse (1) gemäss Anspruch 3 und 13, wobei der mindestens eine Kühlmittelströmungskanal (7a,7b,7b') auf der Innenseite des Extrudatströmungskanals über die Stützstruktur (13) mit Kühlmittel versorgbar ist.

15. Kühldüse (1) insbesondere gemäss einem der Ansprüche 11 bis 14, mit einer Blende im Bereich eines Verteilkanals, wobei die Blende den Verteilkanal verengt und insbesondere als Lochblende oder als Blende mit segmentierten Schlitzen, die als Kreissegmente ausgebildet sind, ausgebildet ist.

## Claims

1. Food- or feed-extruder cooling die (1), having
i) an inlet end (3), which is able to be fastened to a food or feed extruder (E) and at which the extrudate is introducible into the cooling die (1);
ii) an outlet end (5), at which cooled extrudate is able to be discharged;
iii) an extrudate flow duct (6), which extends substantially from the inlet end to the outlet end;
iv) at least one coolant flow duct (7), to which the extrudate flow duct (6) is connected for heat transfer;
wherein, in cross section (X-X) to the main direction of flow (8),
v) the extrudate flow duct (6) is configured substantially as a ring sector; and
vi) an outer wall (9) of the extrudate flow duct (6) is formed at least from a first segment (10) and a second segment (11), wherein the first segment and the second segment are connected together via mechanical connecting elements (12).

2. Cooling die (1) according to Claim 1, wherein the extrudate flow duct (6) is configured in cross section (X-X) to the main direction of flow (8) substantially as a ring sector, in particular as a circular ring sector, of at least 300°, preferably at least 325°, particularly preferably at least 350°.

3. Cooling die (1) according to one of Claims 1 and 2, wherein, in the region of the cross section (X-X) that is not covered by the ring sector of the extrudate flow duct (6), a supporting structure (13), extending substantially along the entire length of the cooling tool (1), for an inner wall (14) of the extrudate flow duct (6) is arranged.

4. Cooling die (1) according to one of Claims 1 to 3, wherein an inner wall (14) of the extrudate flow duct (6) is formed in a substantially cylindrical, in particular hollow cylindrical, manner.

5. Cooling die (1) according to Claim 4, wherein the inner wall (14) of the extrudate flow duct (6) is formed in one piece.

6. Cooling die (1) according to one of Claims 1 to 5, wherein the outer wall (9) of the extrudate flow duct (6) is formed in a cylindrical, in particular hollow cylindrical, manner in the operating state.

7. Cooling die (1) according to one of Claims 3 to 6, wherein the first segment (10) and the second segment (11) of the outer wall (9) of the extrudate flow duct (6) are fastened to the supporting structure (13) by mechanical connecting elements (12).

8. Cooling die (1) according to Claim 7, wherein the first segment (10) and the second segment (11) of the outer wall (9) of the extrudate flow duct (6) are hinged and/or fastened in a pivotable manner to the supporting structure (13).

9. Cooling die (1) according to one of Claims 1 to 8, wherein, in the region of the inlet end (3), an in particular exchangeable distributor (15) is arranged, which is configured such that extrudate is able to be fed from an outlet duct of the food or feed extruder (E) via a single distribution duct (17) to the extrudate flow duct (6) configured as a ring sector.

10. Cooling die (1) according to Claim 9, wherein the distributor (15) comprises a distribution element (15a), which is configured as a cone, in particular a circular cone; a cone frustum, in particular a circular cone frustum.

11. Cooling die (1) according to one of Claims 9 and 10, wherein, in the region of the distributor, in particular in a region of the end of the distributor that faces away from the extruder and/or in a region of the end of the distributor (15) that faces the extruder, a aperture (18, 18') is arranged or able to be arranged, with which aperture (18, 18') the distribution duct (17) is constricted or able to be constricted.

12. Cooling die (1) according to one of Claims 9 to 11, wherein the distributor (15) is formed with one or more cooling ducts (19) for cooling the distribution duct (17) from the outside and/or inside.

13. Cooling die (1) according to one of Claims 1 to 12, wherein at least one coolant flow duct (7a, 7b, 7b'), which is connected to the extrudate flow duct (6) for heat transfer, is present
- on the inner side of the extrudate flow duct (6); and/or
- on the outer side of the extrudate flow duct (6) .

14. Cooling die (1) according to Claims 3 and 13, wherein the at least one coolant flow duct (7a, 7b, 7b') on the inner side of the extrudate flow duct is able to be supplied with coolant via the supporting structure (13).

15. Cooling die (1) in particular according to one of Claims 11 to 14, having a aperture in the region of a distribution duct, wherein the aperture constricts the distribution duct and is configured in particular as a perforated aperture or as a aperture with segmented slits, which are in the form of circle segments.

## Revendications

1. Buse de refroidissement pour extrudeuse d'aliments ou d'aliments pour animaux (1), ladite buse comprenant
i) une extrémité d'entrée (3) qui peut être fixée à une extrudeuse d'aliments ou d'aliments pour animaux (E) et sur laquelle l'extrudat peut être introduit dans la buse de refroidissement (1);
ii) une extrémité de sortie (5) au niveau de laquelle l'extrudat refroidi peut être éjecté ;
iii) un canal d'écoulement d'extrudat (6) qui s'étend essentiellement de l'extrémité d'entrée à l'extrémité de sortie ;
iv) au moins un canal d'écoulement d'agent de refroidissement (7) auquel le canal d'écoulement d'extrudat (6) est relié avec transmission de chaleur ; dans la coupe transversale (X-X) par rapport à la direction d'écoulement principale (8)
v) le canal d'écoulement d'extrudat (6) étant conçu essentiellement comme une découpe annulaire ; et
vi) une paroi externe (9) du canal d'écoulement d'extrudat (6) étant formée au moins à partir d'un premier segment (10) et d'un deuxième segment (11), le premier segment et le deuxième segment étant reliés l'un à l'autre par des éléments de liaison mécaniques (12) .

2. Buse de refroidissement (1) selon la revendication 1, le canal d'écoulement d'extrudat (6) étant conçu dans la coupe transversale (X-X) par rapport à la direction d'écoulement principale (8) essentiellement comme une découpe annulaire, notamment comme une découpe circulaire, d'au moins 300°, de préférence d'au moins 325°, de manière particulièrement préférée d'au moins 350°.

3. Buse de refroidissement (1) selon l'une des revendications 1 et 2, dans laquelle une structure de support (13) qui s'étend essentiellement sur toute la longueur de l'outil de refroidissement (1) et qui est destinée à une paroi intérieure (14) du canal d'écoulement d'extrudat (6) est disposée dans la zone de la section transversale (X-X) qui n'est pas recouverte par la découpe annulaire du canal d'écoulement d'extrudat (6).

4. Buse de refroidissement (1) selon l'une des revendications 1 à 3, une paroi intérieure (14) du canal d'écoulement d'extrudat (6) étant conçue de manière essentiellement cylindrique, notamment cylindrique creuse.

5. Buse de refroidissement (1) selon la revendication 4, la paroi intérieure (14) du canal d'écoulement d'extrudat (6) étant formée d'une seule pièce.

6. Buse de refroidissement (1) selon l'une des revendications 1 à 5, la paroi externe (9) du canal d'écoulement d'extrudat (6) étant conçue de manière cylindrique, notamment cylindrique creuse, à l'état de fonctionnement.

7. Buse de refroidissement (1) selon l'une des revendications 3 à 6, le premier segment (10) et le deuxième segment (11) de la paroi extérieure (9) du canal d'écoulement d'extrudat (6) étant fixés à la structure de support (13) au moyen d'éléments de liaison mécaniques (12).

8. Buse de refroidissement (1) selon la revendication 7, le premier segment (10) et le deuxième segment (11) de la paroi extérieure (9) du canal d'écoulement d'extrudat (6) étant fixés à la structure de support (13) de manière articulée et/ou pivotante.

9. Buse de refroidissement (1) selon l'une des revendications 1 à 8, un distributeur (15) notamment remplaçable étant disposé au niveau de l'extrémité d'entrée (3), lequel distributeur est conçu de telle sorte que l'extrudat peut être amené d'un canal de sortie de l'extrudeuse d'aliments ou d'aliments pour animaux (E) au canal d'écoulement d'extrudat (6), conçu comme une découpe annulaire, par le biais d'un seul canal de distribution (17).

10. Buse de refroidissement (1) selon la revendication 9, le distributeur (15) comprenant un élément de distribution (15a) qui est conçu comme un cône, notamment un cône circulaire ; un cône tronqué, en particulier un cône tronqué circulaire.

11. Buse de refroidissement (1) selon l'une des revendications 9 et 10, une ouverture(18, 18') étant ou pouvant être disposé au niveau du distributeur, notamment dans une région de l'extrémité du distributeur opposée à l'extrudeuse et/ou dans une région de l'extrémité du distributeur (15) qui est dirigée vers l'extrudeuse, laquelle ouverture(18, 18') rétrécit ou peut rétrécir le canal de distribution (17) .

12. Buse de refroidissement (1) selon l'une des revendications 9 à 11, le distributeur (15) étant conçu avec au moins un canal de refroidissement (19) destiné à refroidir le canal de distribution (17) depuis l'extérieur et/ou l'intérieur.

13. Buse de refroidissement (1) selon l'une des revendications 1 à 12, au moins un canal d'écoulement d'agent de refroidissement (7a, 7b, 7b'), qui est relié au canal d'écoulement d'extrudat (6) avec transmission de chaleur, étant présent
- sur le côté intérieur du canal d'écoulement d'extrudat (6) ; et/ou
- sur le côté extérieur du canal d'écoulement d'extrudat (6).

14. Buse de refroidissement (1) selon les revendications 3 et 13, l'au moins un canal d'écoulement d'agent de refroidissement (7a, 7b, 7b') pouvant être alimenté en agent de refroidissement sur le côté intérieur du canal d'écoulement d'extrudat par le biais de la structure de support (13).

15. Buse de refroidissement (1) notamment selon l'une des revendications 11 à 14, ladite buse comprenant uen ouverture au niveau d'un canal de distribution, l'obturateur rétrécissant le canal de distribution et étant conçu notamment comme une ouverture à trou ou comme une ouverture à fentes segmentées qui sont conçues comme des segments circulaires.
